# FASCICULE DE BREVET EUROPEEN

(11) **EP 3 420 619 B1**
(45) Date de publication et mention de la délivrance du brevet: **24.07.2019**
(21) Numéro de dépôt: 17708700.4
(22) Date de dépôt: 17.02.2017
(51) Int. Cl.: H02H 7/26, H02H 7/28

(54) **AÉRONEF COMPRENANT UN RÉSEAU ÉLECTRIQUE À COURANT CONTINU ET UN SYSTÈME DE PROTECTION DUDIT RÉSEAU**
FLUGZEUG MIT EINEM ELEKTRISCHEN GLEICHSTROMNETZWERK UND SYSTEM ZUM SCHUTZ DIESES NETZWERKS
AIRCRAFT INCLUDING A DC ELECTRICAL NETWORK AND A SYSTEM FOR PROTECTING SAID NETWORK

(30) Priorité: 23.02.2016 FR 1651464
(43) Date de publication de la demande: 02.01.2019
(73) Titulaire: Airbus Operations S.A.S., 31060 Toulouse (FR)
(72) Inventeur: BIRKMAYER, Wolfram, 31770 COLOMIERS (FR)
(74) Mandataire: Gicquel, Olivier Yves Gérard
(86) Numéro de dépôt international: PCT/EP2017/053580
(87) Numéro de publication internationale: WO 2017/144353

(56) Documents cités:
- EP-A1- 2 442 417
- EP-A1- 2 910 959
- WO-A1-2012/123015
- WO-A1-2013/131782
- US-A1- 2013 286 521

## Description

La présente invention concerne un aéronef comprenant un réseau électrique à courant continu et un système de protection dudit réseau électrique.

Les réseaux de courant continu à haute tension (HVDC) sont utilisés pour le transport de l'électricité ou pour l'alimentation électrique dans des véhicules, en particulier les aéronefs. Un tel réseau comporte une pluralité de noeuds reliés entre eux par des branches et certains ou tous les noeuds sont en outre reliés à un élément électrique (source électrique ou équipement utilisateur).

De manière générale, un réseau électrique à courant continu est protégé d'éventuels court-circuits ou tout autre changement brutal de l'intensité du courant dans une branche du réseau par un système de protection comportant une pluralité d'éléments de protection, avec un élément de protection monté sur chaque branche. Les éléments de protection sont, par exemple, des limiteurs/disjoncteurs configurés pour limiter la valeur de l'intensité dans une branche défectueuse à une valeur seuil prédéterminée pendant un temps prédéterminée puis pour couper le passage du courant dans ladite branche si nécessaire afin de l'isoler des branches saines. Les éléments de protections sont tous identiques dans leur technologie et ont tous la même valeur seuil.

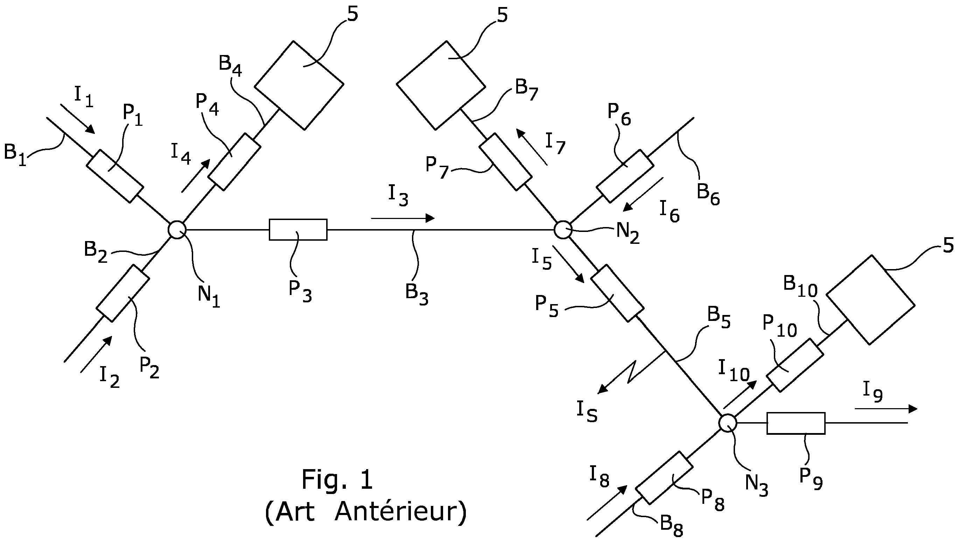

Un tel système de protection est efficace pour protéger le réseau électrique. Cependant, comme décrit ci-après en référence à la figure 1, du fait de la répartition du courant dans le réseau, une ligne saine reliée au même noeud qu'une ligne défectueuse est isolée de manière accidentelle.

On a décrit à la figure 1 une portion d'un réseau électrique à courant continu comportant trois noeuds N₁, N₂ et N₃ reliés entre eux ainsi qu'à des équipements utilisateurs 5 par plusieurs branches B₁- B₁₀. Le noeud N₁ est relié au noeud N₂ par la branche B₃, et le noeud N₂ est relié au noeud N₃ par la branche B₅. Un système de protection du réseau électrique comporte des éléments de protection P₁,..., Pⱼ,..., P₁₀ montés respectivement sur les différentes branches B₁,..., Bⱼ,..., B₁₀.

Un courant I₁ et un courant I₂ entrent dans le noeud N₁ via une branche B₁, respectivement B₂. Le courant I₄ sort du noeud N₁ et rentre dans la branche B₄ qui relie le noeud N₁ à un équipement utilisateur 5 et le courant I₃ sort du noeud N₁ par la branche B₃.

Le courant I₃ et un courant I₆ dans le noeud N₂ via la branche B₃, respectivement une branche B₆ reliant le noeud N₂ à un équipement utilisateur 5. Le courant I₇ sort du noeud N₂ via la branche B₇ qui relie le noeud N₂ à un équipement utilisateur 5 et le courant I₅ sort du noeud N₂ par la branche B₅.

Le courant I₅ et un courant I₈ entrent dans le noeud N₂ via la branche B₅, respectivement une branche B₁₀ reliant le noeud N₃ à un équipement utilisateur 5. Le courant I₉ sort du noeud N₃ via la branche B₉.

En appliquant la loi des noeuds sur chacun des noeuds N₁, N₂, puis N₃, on obtient, respectivement, les équations suivantes : I₃=I₁+I₂-I₄ ; I₅=I₃+I₆-I₇ ; I₉=I₅+I₈-I₁₀.

Supposons que l'impédance dans la branche B₅ soit très inférieure à celle dans la branche B₃ et qu'un court-circuit I_{S} apparait dans la branche B₅ entre les noeuds N₂ et N₃. Avant le court-circuit, l'intensité de courant I₅ dans la branche B₅ est très inférieure à l'intensité de courant I₃ dans la branche B₃ (I₅< I₃) et, après le court-circuit, l'intensité de courant dans la branche B₅ est I₅₁=I₅+I_{S} et l'intensité de courant dans la branche B₃ est I₃₁=I₃+I_{S}.

Etant donné qu'au départ I₅ < I₃, la valeur seuil prédéterminée est atteinte plus rapidement par la valeur de l'intensité de courant dans la branche B₃ que par celle dans la branche B₅ et par conséquent, l'élément de protection P₃ de la branche B₃ détecte le court-circuit avant l'élément de protection P₅ de la branche B₅. En conséquence, c'est le passage du courant dans la branche B₃ non défectueuse qui sera coupé. Cet exemple illustre bien un cas où une branche saine a été isolée de manière erronée au lieu d'uniquement isoler celle qui est réellement défectueuse.

La demande EP2442417 décrit un système de protection d'un réseau électrique de courant continu permettant de détecter et identifier les surintensités électriques et de ne déconnecter que la ligne défectueuse.

L'objet de la présente invention est un système de protection, alternatif au système décrit dans la demande susmentionnée, permettant de détecter et identifier facilement les surintensités électriques et de ne déconnecter que la ligne défectueuse.

A cet effet, l'invention concerne un aéronef comprenant au moins un réseau électrique à courant continu tel que revendiqué dans la revendication 1.

Selon l'invention, chaque noeud du réseau est relié à des éléments du réseau par au moins deux branches, avec un élément de protection associé au noeud (c'est-à-dire adjacent au noeud) sur chacune des branches connectée au noeud.

Un élément de protection monté sur une des branches connectée à un noeud auquel il est associé limite la valeur de l'intensité du courant sortant de la branche par le noeud à une première valeur seuil et limite la valeur de l'intensité du courant entrant dans la branche par le noeud à une seconde valeur seuil qui est supérieure, en valeur absolue, à la première valeur seuil.

Tant qu'il n'y a pas de courant de défaut (dû à un court-circuit) à l'extérieur du noeud, la valeur de l'intensité du courant sortant d'une branche par le noeud est toujours limitée à la première valeur seuil par l'élément de protection monté sur cette branche et associé audit noeud.

En cas de présence d'un courant de défaut sur une branche défectueuse connectée au noeud, la valeur de l'intensité du courant entrant dans ladite branche par le noeud est limitée à la seconde valeur seuil par l'élément de protection monté sur cette branche et associé audit noeud. Puis, le passage du courant est éventuellement interrompu après un temps prédéterminé si le courant de défaut est toujours présent sur la branche défectueuse afin de protéger le réseau électrique.

D'autres avantages et caractéristiques de l'invention apparaîtront dans la description détaillée non limitative ci-dessous. Cette description sera faite au regard des dessins annexés parmi lesquels :
- la figure 1, déjà décrite, illustre de manière schématique le fonctionnement d'un système de protection d'une portion d'un réseau électrique à courant continu affectée par un court-circuit selon l'art antérieur ;
- la figure 2 représente un aéronef comportant un réseau électrique à tension continue selon un mode de réalisation de l'invention ;
- la figure 3 est un schéma du réseau électrique à courant continu de la figure 2, ledit réseau étant protégé par un système de protection comprenant une pluralité d'éléments de protection, selon un mode de réalisation préféré de l'invention ;
- la figure 4 est un schéma détaillé d'un élément de protection de la figure 3, selon un mode de réalisation de l'invention ;
- la figure 5, similaire à la figure 1, illustre de manière schématique le fonctionnement d'un système de protection d'une portion d'un réseau électrique à courant continu affectée par un court-circuit selon un mode de réalisation de l'invention ;
- la figure 6 est un schéma d'un réseau électrique maillé à courant continu comprenant un système de protection selon un mode de réalisation de l'invention.

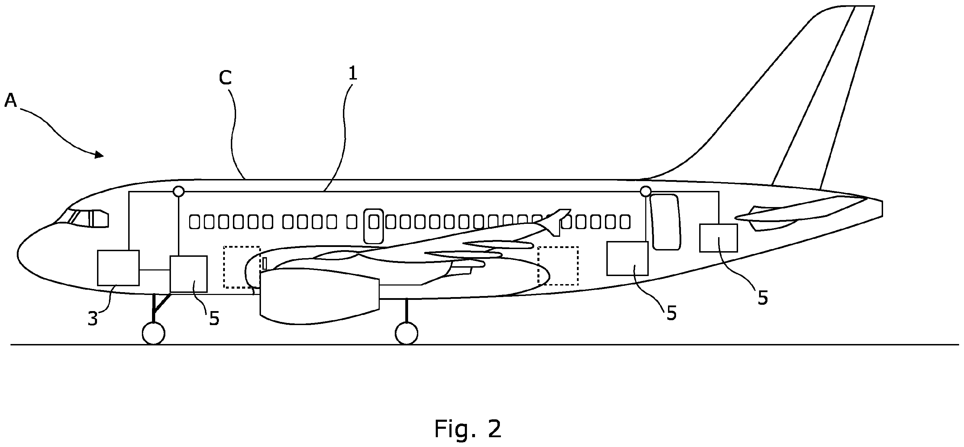

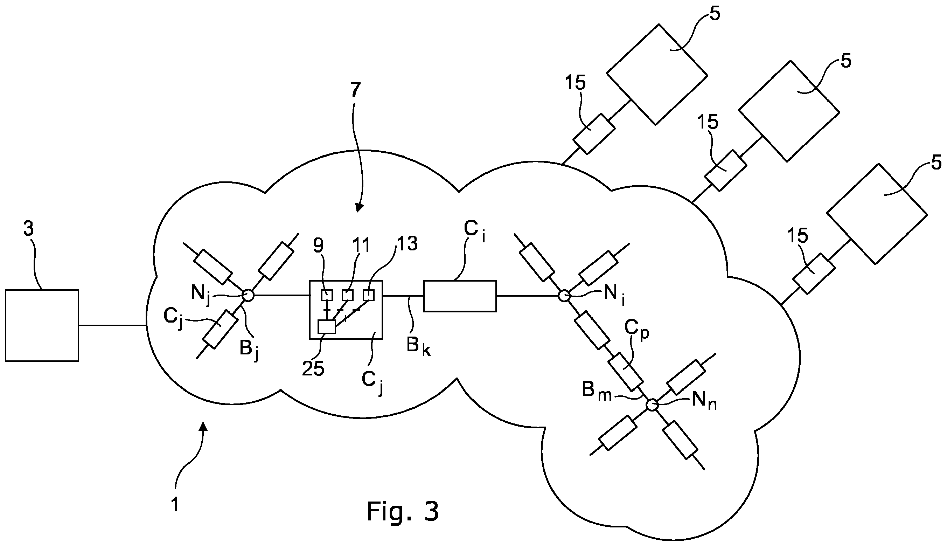

En relation avec les figures 2 et 3 un aéronef A comprend un réseau électrique à courant continu 1 haute tension (HVDC) arrangé dans son fuselage C. Le réseau électrique 1 permet de relier au moins un générateur électrique 3 (un seul est représenté à la figure 2) à une pluralité d'équipements utilisateur 5 de sorte à assurer le transport du courant continu depuis le ou les générateur(s) électrique(s) 3 vers les différents équipements utilisateurs 5.

Le réseau électrique 1 comporte des noeuds N₁,..., Nᵢ,..., Nₙ reliés entre eux, deux à deux, par des branches B₁,..., Bₖ,..., Bₘ (ou câbles). Certains noeuds sont en outre reliés, par des branches, à un générateur électrique 3 et/ou à un équipement utilisateur 5.

De manière connue, le réseau électrique à courant continu 1 comprend un système 7 de protection configuré pour détecter tout changement brutal de l'intensité du courant dans le réseau électrique 1 et identifier une branche affecté par un défaut électrique (par exemple un court-circuit) afin de la déconnecter si nécessaire.

En référence avec la figure 3, le système 7 de protection comporte une pluralité d'éléments de protection C₁,..., Cⱼ,..., Cₚ montés dans les différentes branches.

Selon l'invention, sur chaque branche Bₖ reliant deux noeuds Nⱼ et Nᵢ entre eux, sont montés en série un premier élément de protection Cⱼ et un second élément de protection Cᵢ. Chaque élément de protection adjacent à un noeud est dit associé à ce noeud, ainsi le premier élément de protection Cⱼ est associé au noeud Nⱼ et le second élément de protection est associé au noeud Nᵢ.

Chaque élément de protection associé à un noeud est configuré pour :
- mesurer des paramètres du courant circulant dans la branche Bₖ sur lequel il est monté, en particulier la valeur de l'intensité du courant et son sens relativement au noeud auquel il est associé ;
- sélectionner, en fonction du sens du courant, une valeur seuil prise parmi une première valeur seuil S₁ ou une seconde valeur seuil S₂ supérieure à la première valeur seuil S₁ en valeur absolue ;
- comparer la valeur de l'intensité du courant à la valeur seuil sélectionnée ;
- limiter le courant à la valeur seuil sélectionnée ;
- et éventuellement couper le passage du courant dans la branche.

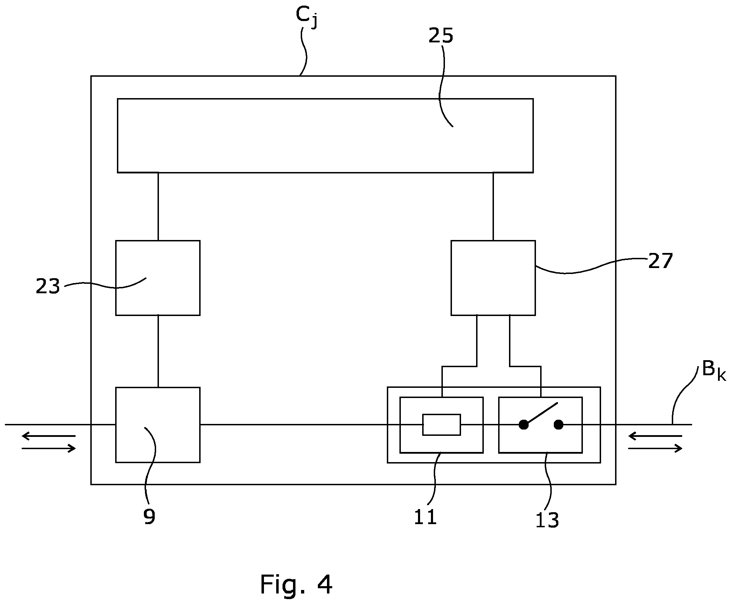

Un élément de protection Cⱼ associé à un noeud Nⱼ, tel qu'illustré à la figure 4, est par exemple un boitier électronique monté sur une branche Bₖ et qui comprend une unité centrale 25 reliée à un capteur de courant 9 pour mesurer des paramètres du courant traversant la branche Bₖ, à un dispositif limiteur de courant bidirectionnel 11 et à un dispositif coupe-circuit 13. Le dispositif limiteur de courant 11 et le dispositif coupe-circuit 13 sont prévus pour, respectivement, à réception d'un signal de limitation émis par l'unité centrale 25, limiter la valeur du courant traversant la branche Bₖ à la valeur seuil sélectionnée et éventuellement pour, à réception d'un signal de coupure émis par l'unité centrale 25, couper le passage du courant traversant la branche Bₖ.

Le capteur de courant 9 est configuré pour mesurer la valeur algébrique de l'intensité du courant, cette dernière étant affectée d'un signe (+ ou -) en fonction du sens du courant. Par convention dans la suite de la description, et à titre d'exemple uniquement, le capteur de courant 9 d'un élément de protection Cⱼ associé au noeud Nⱼ et monté sur une branche Bₖ a un signe positif (+) si le courant sort de la branche Bₖ par le noeud Nⱼ, et a un signe négatif (-) si le courant rentre dans la branche Bₖ par le noeud Nⱼ.

Le capteur de courant 9 transmet un signal comprenant la valeur algébrique du courant mesurée et son signe à l'unité centrale 25 (par l'intermédiaire d'un convertisseur analogique-numérique 23 si nécessaire).

L'unité centrale 25, est par exemple un microcontrôleur, comprenant un processeur, des mémoires, une horloge, ainsi que des unités périphériques et interfaces d'entrées-sorties via lesquelles elle est connectée aux différents constituants de l'élément de protection.

Deux valeurs seuils S₁, S₂ sont enregistrées dans les mémoires de l'unité centrale 25. La première valeur seuil S₁ est utilisée comme valeur seuil par l'unité centrale 25 pour un sens de courant positif (courant sortant de la branche Bₖ par le noeud associé), tandis que la seconde valeur seuil S₂, strictement supérieure en valeur absolue à la première valeur seuil S₁, est utilisée comme valeur seuil pour un sens de courant négatif (courant entrant de la branche Bₖ par le noeud associé). En outre, pour chaque valeur seuil S₁, S₂, un temps prédéterminé T₁, T₂ est enregistré dans les mémoires de l'unité centrale, avec un premier temps prédéterminé T₁ associé à la première valeur seuil S1 et le second temps prédéterminé T₂ associé à la deuxième valeur seuil S₂.

En fonction du signe du courant qui est compris dans le signal émis par le capteur de courant 9 vers l'unité centrale 25, l'unité centrale 25 compare la valeur de l'intensité du courant à la valeur seuil utilisée, soit la première valeur seuil S₁ ou la seconde valeur seuil S₂.

Si le résultat de la comparaison indique que le courant mesuré par le capteur de courant 9 est supérieur à la valeur seuil utilisée, l'unité centrale 25 émet (par l'intermédiaire d'un convertisseur numérique-analogique 27 au besoin) un signal de limitation au dispositif limiteur de courant 11 pour limiter l'intensité du courant dans la branche Bₖ à la valeur seuil utilisée, et enclenche un compte à rebours via son horloge pour chronométrer un temps prédéterminé égal au premier temps prédéterminé T₁ si la valeur seuil utilisée est la première valeur seuil S₁ ou au second temps prédéterminé T₂ si la valeur seuil utilisée est la seconde valeur seuil S₂.

A l'issu du temps prédéterminé T1 ou T₂, le dispositif limiteur de courant 11 n'est plus activé (le signal de limitation n'est plus émis) par l'unité centrale 25 et ne limite plus le courant dans la branche Bₖ.

Si après le temps prédéterminé T₁ ou T₂, le résultat de la comparaison effectuée par l'unité centrale 25 indique que le courant mesuré par le capteur de courant 9 est encore supérieur à la valeur seuil utilisée (S₁ ou S₂ en fonction du signe du courant), l'unité centrale 25 émet (par l'intermédiaire du convertisseur numérique-analogique 27 au besoin), un signal de coupure au dispositif coupe-circuit 13 pour couper le passage de courant dans la branche Bₖ et l'isoler des autres branches saines.

Comme décrit plus haut, le dispositif limiteur de courant 11 est bidirectionnel en ce sens qu'il est apte à et configuré pour limiter l'intensité de courant dans la branche Bₖ à une valeur différente en fonction du sens du courant, soit à la première valeur seuil S₁ pour un courant positif ou à la seconde valeur seuil S₂ pour un courant négatif. La réalisation pratique du dispositif limiteur de courant bidirectionnel est à la portée de l'homme du métier, et, par exemple, un tel élément est à technologie semi-conducteur et constitué de deux transistors MOS de type déplété, tête-bêche, ou est un élément actif consisté de deux sources de courant, tête-bêche, chacune étant associée à une diode assurant le caractère bidirectionnel du dispositif.

Le dispositif coupe-circuit 13 est quant à lui, par exemple, un interrupteur, de type à transistor, ou encore un coupe-circuit pyrotechnique, se déclenchant à la réception du signal de coupure.

En variante, les fonctions accomplies par le dispositif limiteur de courant 11 et le dispositif coupe-circuit 13 sont effectuées par un seul élément comportant essentiellement un transistor à effet de champ de type MOSFET. Dans ce cas, le transistor MOSFET est configuré pour être contrôlé à la fois par le signal de limitation et le signal de coupure. En effet, lorsqu'il est contrôlé par le signal de limitation, le transistor MOSFET est configuré pour agir comme un résistor dont la résistance peut être variée en fonction de la valeur seuil sélectionnée par l'unité centrale (S₁ ou S₂). Lorsqu'il est contrôlé par le signal de coupure, le transistor MOSFET est configuré pour agir comme un interrupteur pour déconnecter la branche sur laquelle est monté l'élément de protection.

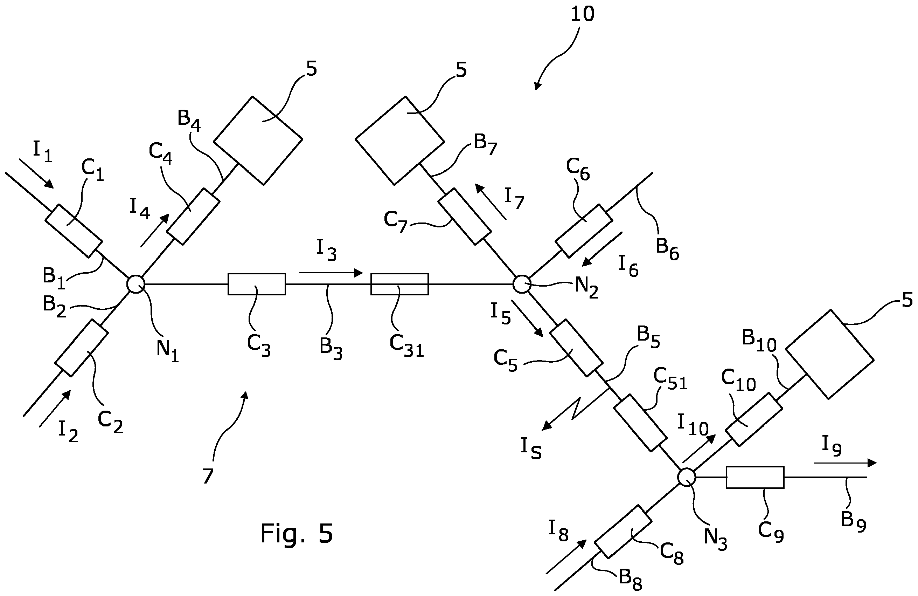

En référence avec la figure 5, le fonctionnement du système de protection 7 selon la présente invention va être décrit pour une portion 10 d'un réseau électrique à courant continu comportant trois noeuds N₁, N₂ et N₃ reliés entre eux ainsi qu'à des équipements utilisateurs 5 par plusieurs branches B₁,...Bₖ...B₁₀. Le noeud N₁ est relié au noeud N₂ par la branche B₃, et le noeud N₂ est relié au noeud N₃ par la branche B₅.

Un courant I₁ et un courant I₂ entrent dans le noeud N₁ via une branche B₁, respectivement B₂. Le courant I₄ sort du noeud N₁ par la branche B₄ qui relie le noeud N₁ à un équipement utilisateur 5 et le courant I₃ sort du noeud N₁ par la branche B₃.

Le courant I₃ et un courant I₆ entrent dans le noeud N₂ via la branche B₃, respectivement une branche B₆ reliant le noeud N₂ à un équipement utilisateur 5. Le courant I₇ sort du noeud N₂ par la branche B₇ qui relie le noeud N₂ à un équipement utilisateur 5 et le courant I₅ sort du noeud N₂ par la branche B₅.

Le courant I₅ et un courant I₈ entrent dans le noeud N₂ via la branche B₅, respectivement une branche B₁₀ reliant le noeud N₃ à un équipement utilisateur 5. Le courant I₉ sort du noeud N₃ via la branche B₉.

En appliquant la loi des noeuds sur chacun des noeuds N₁, N₂, puis N₃, on obtient, respectivement, les équations suivantes : I₃=I₁+I₂-I₄ ; I₅=I₃+I₆-I₇ ; I₉=I₅+I₈-I₁₀.

Le système de protection 7 comporte des éléments de protection C₁,..., Cⱼ,..., C₁₀ montés sur les différentes branches. Chaque élément de protection Cj est associé à un noeud Nᵢ (i=1, 2, 3) correspondant. Plus particulièrement, les éléments de protection C₁ (monté sur B₁),C₂ (monté sur B₂), C₃ (monté sur B₃), C₄ (monté sur B₄) sont associés au noeud N₁, les éléments de protection C₃₁ (monté sur B₃), C₅ (monté sur B₅), C₆ (monté sur B₆), C₇ (monté sur B₇) sont associés au noeud N₂, et les éléments de protection C₅₁ (monté sur B₅), C₈ (monté sur B₈), C₉ (monté sur B₉), C₁₀ (monté sur B₁₀) sont associés au noeud N₃. Pour un élément de protection Cⱼ associé à un noeud Nᵢ et monté sur une branche Bₖ, un courant électrique sortant de la branche Bₖ par le noeud Nᵢ (sens positif selon la convention choisie) est limité par l'élément de protection Cⱼ à la première valeur seuil S₁ tandis qu'un courant électrique entrant dans la branche Bₖ par le noeud Nᵢ (sens négatif selon la présente convention) est limité par l'élément de protection Cⱼ à la deuxième valeur seuil S₂, avec en valeur absolue S₁< S₂.

Ainsi, chaque noeud N₁- N₃, du réseau électrique 1 est relié à des composants du réseau (noeuds N₁- N₃, ou équipement utilisateur 5 ou éventuellement générateur électrique (non représenté sur la figure 5)) par au moins deux branches B₁- B₁₀, avec un élément de protection C₁-C₁₀ associé au noeud, c'est-à-dire adjacent au noeud, monté sur chacune des branches connectée au noeud.

Lorsque tout fonctionne normalement, les éléments de protection C₁-C₁₀ sont opérationnels uniquement selon la première valeur seuil S₁. Autrement dit, les intensités de courant sont limitées par les éléments de protection C₁-C₁₀ uniquement dans le sens des courants positifs et la deuxième valeur de coupe S₂ n'est pas atteinte.

En référence au noeud N₂, dans un fonctionnement semblable aux éléments de protection des systèmes de protection selon l'art antérieur, en cas de surintensité sur la branche B₃ portant le courant I₃ entrant dans le noeud N₂, l'élément de protection C₃₁ associé au noeud N₂ limite le courant I₃ à la première valeur seuil S₁ pendant le temps T₁, puis passé ce temps, compare à nouveau le courant I₃ à cette même valeur seuil S₁. Si le courant I₃ est supérieur à S₁, l'élément de protection C₃₁ coupe la circulation du courant I₃ dans la branche B₃.

Dans le cas où un court-circuit I_{S} apparait dans la branche B₅ entre les noeuds N₂ et N₃ et entre les éléments de protections C_{5 et} C₅₁, l'intensité du courant dans la branche B₅ qui traverse l'élément de protection C₅ devient I_{5'}=I₅+I_{S} et l'intensité du courant dans la branche B₃ qui traverse l'élément de protection C₃₁ devient I₃₁=I₃+I_{S}.

En référence au noeud N₂, l'intensité de courant I₃₁ traversant l'élément de protection C₃₁ est positive tandis que l'intensité de courant I_{5'}, traversant l'élément de protection C₅ est négative. Ainsi, quelle que soit la relation d'ordre entre les intensités de courant initiales I₃ et I₅ (I₃≤ I₅ ou I₅ < I₃), l'élément de protection C₃₁ associé au noeud N₂ limite la valeur de l'intensité du courant I₃₁ dans la branche B₃ à la première valeur seuil S₁, tandis que l'élément de protection C₅ monté dans la branche B₅ limite la valeur de l'intensité du courant I_{5'} dans la branche B₅ à la seconde valeur seuil S₂. On déduit alors (quelles que soient les impédances dans les branches B₃ et B₅ ou quelle que soit la configuration du circuit) que le court-circuit a eu lieu dans la branche B₅ et non dans B₃ et par conséquent, la branche défectueuse est correctement identifiée.

Après un temps T₂ de limitation du courant I_{5'} du courant dans la branche B₅ à la seconde valeur seuil S₂, l'unité centrale 25 de l'élément de protection C₅ compare à nouveau la valeur de l'intensité du courant I_{5'} à cette même valeur seuil S₂ et si ladite valeur est supérieure à la seconde valeur seuil S₂, l'unité centrale 25 émet un signal de coupure vers le dispositif coupe circuit 13 pour couper la circulation du courant dans la branche B₅ et isoler cette dernière des branches saines.

On notera que le temps T₂ peut être nul dans le cas où la branche défectueuse doit être immédiatement déconnectée afin de ne pas endommager des équipements utilisateurs 5 connectés à cette branche.

Ainsi, un élément de protection C₃, C₅ monté sur une des branches B₃, B₅ connectée à un noeud N₂ auquel il est associé limite la valeur de l'intensité du courant sortant de la branche B₃ par le noeud N₂ à la première valeur seuil S₁ et limite la valeur de l'intensité du courant entrant dans la branche B₅ par le noeud N₂ à la seconde valeur seuil S₂ qui est supérieure, en valeur absolue, à la première valeur seuil S₁.

Tant qu'il n'y a pas de courant de défaut (dû à un court-circuit) à l'extérieur du noeud N₂, la valeur de l'intensité du courant sortant d'une branche B₃ par le noeud N₂ est toujours limitée à la première valeur seuil S₁ par l'élément de protection C₃ monté sur cette branche et associé audit noeud.

En cas de présence d'un courant de défaut sur une branche défectueuse B₅ connectée au noeud, la valeur de l'intensité du courant entrant dans ladite branche B₅ par le noeud N₂ est limitée à la seconde valeur seuil S₂ par l'élément de protection C₅ monté sur cette branche et associé audit noeud. Puis, le passage du courant est éventuellement interrompu après un temps prédéterminé T₂ si le courant de défaut est toujours présent sur la branche défectueuse afin de protéger le réseau électrique 1.

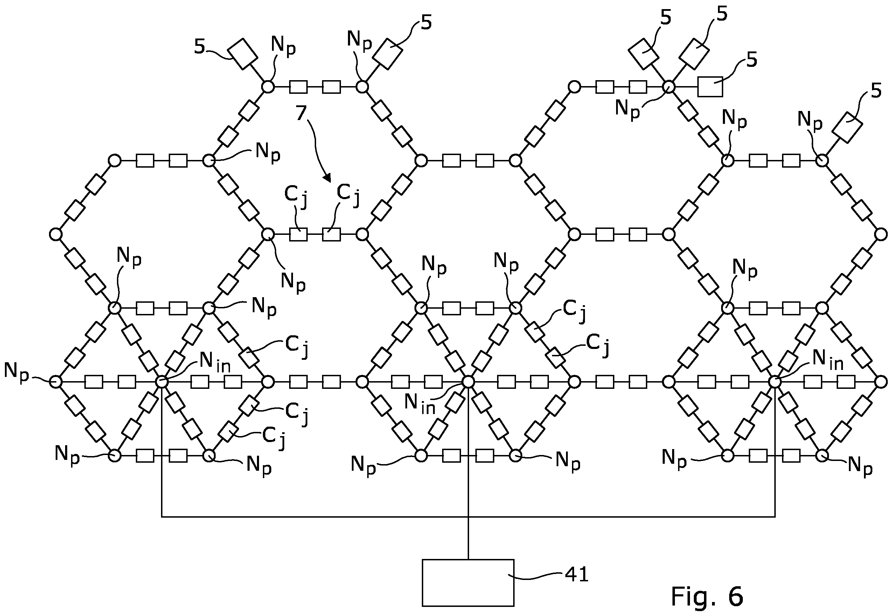

Avantageusement, et tel qu'illustré à la figure 6, le réseau électrique de courant continu est maillé (ou « mesh »). Selon ce mode de réalisation, le réseau électrique de courant continu 1 a une structure en forme de filet comportant des noeuds d'alimentation Nₚ connectés pair à pair par des branches Bₖ. Le réseau 1 est alimenté par une source 41 de courant continu HVDC qui débite un courant à partir des noeuds d'injections Nᵢₙ vers des équipements utilisateurs 5 via le réseau de noeuds d'alimentation Nₚ. Plusieurs équipements utilisateurs 5 peuvent être connectés à un même noeud d'alimentation Nₚ. Chaque maille est, par exemple, de forme hexagonale dont les sommets sont occupés par les noeuds d'alimentation Nₚ et certaines mailles ont un noeud d'injection Nᵢₙ en leur centre. Le courant est injecté par chaque noeud d'injection Nᵢₙ vers les noeuds d'alimentation Nₚ voisins et ensuite à partir de chaque noeud d'alimentation Nₚ, le courant peut circuler dans les différentes branches Bₖ selon l'un quelconque des deux sens d'écoulement en fonction des éléments ou équipements utilisateurs 5 mis en marche.

Cette architecture permet aux noeuds d'alimentation Nₚ d'être reliés entre eux par de nombreux chemins apportant une grande sécurité et une grande tolérance aux pannes. En effet, si un chemin (constitué de noeuds et de branches) est défectueux, les courants peuvent emprunter les autres chemins pour assurer la continuité de l'alimentation électrique.

En outre, le réseau maillé de courant continu 1 est protégé par le système de protection 7 selon l'invention. En effet, des éléments de protection Cⱼ sont montés dans les différentes branches Bₖ d'interconnexion et élément de protection Cⱼ est associé à un noeud afin de rapidement identifier et isoler tout élément (noeuds ou branche d'interconnexion) défectueux.

Le réseau électrique 1 maillé de courant continu est un réseau d'alimentation électrique dans un aéronef fournissant par exemple une tension continue d'environ 270V DC. Le courant électrique continu fourni par des générateurs électriques de l'aéronef est acheminé à partir des noeuds d'injections Nᵢₙ vers les différents équipements électriques 5 de l'aéronef via le réseau de noeuds d'alimentation Nₚ et branches Bₖ d'interconnexion qui est protégé par le système de protection 7 selon l'invention.

En outre, les éléments de protection Cⱼ sont montés dans les différentes branches d'interconnexion et chaque élément de protection est associé à un noeud (d'injection ou d'alimentation) afin de rapidement identifier et isoler tout élément défectueux. Chaque élément de protection associé à un noeud fonctionne selon une première valeur seuil S₁ qui peut par exemple être de l'ordre de 8A pour un courant électrique sortant d'une branche par ledit noeud et une deuxième valeur seuil S₂ (avec S₁ < S₂) qui peut par exemple, en valeur absolue, être de l'ordre de 10A pour un courant électrique entrant dans une branche par ledit noeud.

En variante, les branches connectées aux équipements utilisateurs 5 peuvent comporter de simples coupe-circuits (non représentés) de type fusibles qui sont configurés pour fondre afin de couper le courant dans la branche lorsqu'une surintensité est détectée dans la branche.

Le réseau électrique maillé de courant continu permet ainsi de satisfaire les besoins de l'aéronautique qui sont de plus en plus dictés par des contraintes particulièrement sévères de sécurité, de fiabilité et de redondance. En outre, le système de protection permet d'identifier rapidement et avec précision tout élément défectueux assurant ainsi une sécurité optimale au réseau électrique de l'aéronef.

## Revendications

1. Aéronef (A) comprenant au moins un réseau électrique à courant continu (1), ledit réseau (1) comportant des noeuds (Nᵢ) reliés entre eux deux à deux par des branches (Bₖ), chaque noeud étant connecté à au moins deux branches, ledit réseau étant protégé par un système de protection (7) comprenant une pluralité d'éléments de protection (Cⱼ) montés sur les branches (Bₖ), chaque élément de protection monté sur une branche (Bₖ) comprenant une unité centrale (25) associée à un capteur de courant (9) configuré pour mesurer la valeur de l'intensité du courant dans la branche (Bₖ), à un dispositif-coupe circuit (13) commandé par l'unité centrale (25) pour couper le passage du courant, pour chaque branche (Bₖ) du réseau (1) reliant deux noeuds (Nⱼ, Nᵢ), le système de protection (7) comprenant deux éléments de protection (Cⱼ, Cᵢ) montés en série sur la branche, où chaque élément de protection adjacent à un noeud est dit associé à ce noeud, et pour chaque élément de protection (Cⱼ, Cᵢ) du système de protection (7) monté sur une branche (Bₖ):
• le capteur de courant (9) étant, en outre, configuré pour déterminer le sens du courant dans la branche (Bₖ) relativement au noeud (Nⱼ, Nᵢ) auquel ledit élément de protection (Cⱼ, Cᵢ) est associé, le sens étant déterminé parmi un premier sens dans lequel le courant entre dans la branche (Bₖ) par le noeud auquel ledit élément de protection est associé, et un second sens dans lequel le courant sort de la branche (Bₖ) par le noeud auquel ledit élément de protection est associé ;
• l'unité centrale (25) étant configurée pour sélectionner, en fonction du sens du courant déterminé par le capteur de courant (9), une valeur seuil, dite valeur seuil sélectionnée, prise parmi une première valeur (S₁) ou une seconde valeur seuil (S₂) supérieure à la première valeur seuil (S₁) en valeur absolue, et pour comparer la valeur de l'intensité du courant à la valeur seuil sélectionnée ;
**caractérisé en ce que** l'unité centrale (25) de chaque élément de protection monté sur une branche (Bk) est associée à un dispositif limiteur de courant (11) commandé par ladite unité centrale (25) pour limiter le courant traversant la branche (Bk), le dispositif limiteur de courant (11) étant bidirectionnel et configuré pour limiter le courant traversant la branche (Bk) à la valeur seuil sélectionnée par l'unité centrale (25).

2. Aéronef (A) selon la revendication 1, **caractérisé en ce que** l'unité centrale (25) sélectionne une valeur seuil égale à la première valeur seuil (S₁) si le capteur de courant (9) indique que le courant circule dans le second sens, ou égale à la seconde valeur seuil (S₂) si le capteur de courant (9) indique que le courant circule dans le premier sens.

3. Aéronef (A) selon l'une quelconque des revendication 1 à 2, **caractérisé en ce que** l'unité centrale (25) comprend une horloge et est configurée pour décompter un temps prédéterminé (T₁ T₂) à compter de l'instant où l'intensité du courant mesuré par la capteur de courant (9) est supérieure à la valeur seuil sélectionnée, l'unité centrale (25) envoyant un signal au dispositif limiteur de courant (11) pour limiter le courant traversant la branche (Bₖ) durant le temps prédéterminé.

4. Aéronef (A) selon l'une quelconque des revendications 1 à 3, **caractérisé en ce que** le réseau électrique à courant continu (1) est un réseau maillé.

## Patentansprüche

1. Luftfahrzeug (A), welches wenigstens ein elektrisches Gleichstromnetz (1) umfasst, wobei das Netz (1) Knoten (N₁) aufweist, die durch Zweige (Bₖ) paarweise miteinander verbunden sind, wobei jeder Knoten an wenigstens zwei Zweige angeschlossen ist, wobei das Netz durch ein Schutzsystem (7) geschützt ist, das mehrere in den Zweigen (Bₖ) angebrachte Schutzelemente (Cⱼ) umfasst, wobei jedes in einem Zweig (Bₖ) angebrachte Schutzelement eine zentrale Einheit (25) umfasst, die einem Stromsensor (9), der dafür ausgelegt ist, den Wert der Stromstärke in dem Zweig (Bₖ) zu messen, und einer Unterbrechungsvorrichtung (13), die von der zentralen Einheit (25) gesteuert wird, um den Fluss des Stroms zu unterbrechen, zugeordnet ist, wobei für jeden Zweig (Bₖ) des Netzes (1), der zwei Knoten (Nⱼ, Nᵢ) verbindet, das Schutzsystem (7) zwei in dem Zweig in Reihe geschaltete Schutzelemente (Cⱼ, Cᵢ) umfasst, wobei jedes Schutzelement, das einem Knoten benachbart ist, als diesem Knoten zugeordnet bezeichnet wird, und wobei für jedes Schutzelement (Cⱼ, Cᵢ) des Schutzsystems (7), das in einem Zweig (Bₖ) angebracht ist:
• der Stromsensor (9) außerdem dafür ausgelegt ist, die Richtung des Stroms in dem Zweig (Bₖ) in Bezug auf den Knoten (Nⱼ, Nᵢ), dem das Schutzelement (Cⱼ, Cᵢ) zugeordnet ist, zu bestimmen, wobei die Richtung aus einer ersten Richtung, in welcher der Strom in den Zweig (Bₖ) über den Knoten eintritt, dem das Schutzelement zugeordnet ist, und einer zweiten Richtung, in welcher der Strom aus dem Zweig (Bₖ) über den Knoten austritt, dem das Schutzelement zugeordnet ist, bestimmt wird;
• die zentrale Einheit (25) dafür ausgelegt ist, in Abhängigkeit von der Richtung des Stroms, die durch den Stromsensor (9) bestimmt wurde, einen Schwellenwert, "ausgewählter Schwellenwert" genannt, aus einem ersten Wert (S₁) oder einem zweiten Schwellenwert (S₂), der dem absoluten Betrag nach größer als der erste Schwellenwert (S₁) ist, auszuwählen und den Wert der Stromstärke mit dem ausgewählten Schwellenwert zu vergleichen;
**dadurch gekennzeichnet, dass** die zentrale Einheit (25) jedes Schutzelements, das in einem Zweig (Bₖ) angebracht ist, einer Strombegrenzungsvorrichtung (11) zugeordnet ist, die von der zentralen Einheit (25) gesteuert wird, um den durch den Zweig (Bₖ) fließenden Strom zu begrenzen, wobei die Strombegrenzungsvorrichtung (11) bidirektional und dafür ausgelegt ist, den durch den Zweig (Bₖ) fließenden Strom auf den von der zentralen Einheit (25) ausgewählten Schwellenwert zu begrenzen.

2. Luftfahrzeug (A) nach Anspruch 1, **dadurch gekennzeichnet, dass** die zentrale Einheit (25) einen Schwellenwert auswählt, der gleich dem ersten Schwellenwert (S₁) ist, falls der Stromsensor (9) anzeigt, dass der Strom in der zweiten Richtung fließt, oder gleich dem zweiten Schwellenwert (S₂) ist, falls der Stromsensor (9) anzeigt, dass der Strom in der ersten Richtung fließt.

3. Luftfahrzeug (A) nach einem der Ansprüche 1 bis 2, **dadurch gekennzeichnet, dass** die zentrale Einheit (25) einen Zeitgeber umfasst und dafür ausgelegt ist, eine vorbestimmte Zeit (T₁, T₂) ab dem Zeitpunkt, zu dem die von dem Stromsensor (9) gemessene Stromstärke größer als der ausgewählte Schwellenwert ist, abwärts zu zählen, wobei die zentrale Einheit (25) ein Signal an die Strombegrenzungsvorrichtung (11) sendet, um den durch den Zweig (Bₖ) fließenden Strom während der vorbestimmten Zeit zu begrenzen.

4. Luftfahrzeug (A) nach einem der Ansprüche 1 bis 3, **dadurch gekennzeichnet, dass** das elektrische Gleichstromnetz (1) ein Maschennetz ist.

## Claims

1. Aircraft (A) comprising at least one direct current electrical network (1), said network (1) comprising nodes (N₁) linked together in pairs by branches (Bₖ), each node being connected to at least two branches, said network being protected by a protection system (7) comprising a plurality of protection elements (Cⱼ) mounted on the branches (Bₖ), each protection element mounted on a branch (Bₖ) comprising a central processing unit (25) associated with a current sensor (9) configured to measure the value of the intensity of the current in the branch (Bₖ), and with a circuit breaking device (13) controlled by the central processing unit (25) to break the passage of the current, for each branch (Bₖ) of the network (1) linking two nodes (Nⱼ, Nᵢ), the protection system (7) comprising two protection elements (Cⱼ, Cᵢ) mounted in series on the branch, where each protection element adjacent to a node is said to be associated with that node, and, for each protection element (Cⱼ, Cᵢ) of the protection system (7) mounted on a branch (Bₖ):
• the current sensor (9) is, in addition, configured to determine the direction of the current in the branch (Bₖ) relative to the node (Nⱼ, Nᵢ) with which said protection element (Cⱼ, Cᵢ) is associated, the direction being determined out of a first direction in which the current enters into the branch (Bₖ) by the node with which said protection element is associated, and a second direction in which the current leaves the branch (Bₖ) by the node with which said protection element is associated;
• the central processing unit (25) is configured to select, as a function of the direction of the current determined by the current sensor (9), a threshold value, called selected threshold value, taken from a first value (S₁) or a second threshold value (S₂) greater than the first threshold value (S₁) in absolute value, and to compare the value of the intensity of the current to the selected threshold value;
**characterized in that** the central processing unit (25) of each protection element mounted on a branch (Bₖ) is associated with a current limiter device (11) controlled by said central processing unit (25) to limit the current passing through the branch (Bₖ), the current limiter device (11) being bidirectional and configured to limit the current passing through the branch (Bₖ) to the threshold value selected by the central processing unit (25) .

2. Aircraft (A) according to Claim 1, **characterized in that** the central processing unit (25) selects a threshold value equal to the first threshold value (S₁) if the current sensor (9) indicates that the current is flowing in the second direction, or equal to the second threshold value (S₂) if the current sensor (9) indicates that the current is flowing in the first direction.

3. Aircraft (A) according to either one of Claims 1 and 2, **characterized in that** the central processing unit (25) comprises a clock and is configured to count down a predetermined time (T₁ T₂) to be counted from the instant at which the intensity of the current measured by the current sensor (9) is greater than the selected threshold value, the central processing unit (25) sending a signal to the current limiter device (11) to limit the current passing through the branch (Bₖ) for the predetermined time.

4. Aircraft (A) according to any one of Claims 1 to 3, **characterized in that** the direct current electrical network (1) is a meshed network.
